Europäisches Patentamt

European Patent Office

Office européen des brevets

(11) Numéro de publication: **0 359 599**
**A1**

## DEMANDE DE BREVET EUROPEEN

(21) Numéro de dépôt: 89402100.5

(22) Date de dépôt: 25.07.89

(51) Int. Cl.5: **B 60 G 5/053**

(30) Priorité: 02.09.88 FR 8811484

(43) Date de publication de la demande:
**21.03.90 Bulletin 90/12**

(84) Etats contractants désignés: **DE ES GB IT**

(71) Demandeur: **RENAULT VEHICULES INDUSTRIELS**
**Société Anonyme dite:**
**129 rue Servient "La Part Dieu"**
**F-69003 Lyon (FR)**

(72) Inventeur: **Mounier-Poulat, François**
**Les Baboulières**
**F-38540 Heyrieux (FR)**

**Savoie, Marcel**
**N. 8 Le Gouret**
**F-38540 Heyrieux (FR)**

**Armanet, Raymond**
**Place de la Bascule**
**F-38440 Chatonnay (FR)**

(74) Mandataire: **Saint Martin, René et al**
**Régie Nationale des Usines Renault Direction des**
**Recherches et Développements Service 0267 8-10,**
**Avenue Emile-Zola**
**F-92109 Boulogne Billancourt (FR)**

(54) Dispositif de fixation d'un ressort à lame en matériau composite.

㊳ Système de suspension allégé et conception rustique pour essieux tandem (6) et (7) guidés par de biellettes (8) et (11), notamment pour des véhicules industriels 6 x 4 dont le poids mort de la suspension doit être minimum.

Selon l'invention, les ressorts métalliques sont remplacés par des ressorts à lame en matériau composite (4). Afin de supprimer les contraintes (cisaillement, flexion transversale, torsion) liées aux systèmes de bridage utilisés actuellement, l'appui central (3) est support élastique lamellé courbe, et les appuis d'extrémité de lame de ressort (4) sont des articulations rotulées (17) montées sur un patin élastique (10).

FIG.1

EP 0 359 599 A1

# Description

## DISPOSITIF DE FIXATION D'UN RESSORT A LAME EN MATERIAU COMPOSITE

La présente invention concerne un dispositif de fixation d'un ressort à lame en matériau composite, notamment pour les essieux tandem d'un véhicule industriel.

Les essieux des tandems connus sont guidés dans le sens longitudinal et dans le sens transversal par des systèmes de bielles. La charge est appliquée au centre des lames de ressort par une articulation centrale à bagues. Ces ressorts à lames peuvent également servir de retenue transversale des essieux.

D'une façon générale, et plus particulièrement pour les véhicules 6 x 4 comme les citerniers, les porte-malaxeurs etc..., le poids des éléments non suspendus doit être minimum. Dans la solution décrite, le poids des ressorts à lames ainsi que leurs articulations représente environ 50 % du poids total des organes de suspension.

La présente invention a pour but la réalisation d'une suspension d'un poids réduit et conçue d'une façon rustique.

Le matériau composite a été choisi pour la réalisation d'un ressort de faible masse. Mais la seule contrainte mécanique acceptée par ce type de ressort étant la flexion simple, les liaisons du ressort avec le chassis d'une part, et avec les essieux d'autre part, doivent tenir compte de cette particularité.

Un système de guidage des essieux par des biellettes destinées à reprendre les efforts longitudinaux et transversaux, permet d'annuler ces efforts parasites. Le brevet n° 84-17498 décrit un tel système de liaison.

Les dessins annexés illustrent l'invention :

- La figure 1 représente une vue en élévation représentant les dispositifs de liaison de la lame de ressort composite avec les essieux tandem et le chassis, suivant l'invention.

- La figure 2 représente un appui central élastique lamellé courbe.

- La figure 3 représente un des appuis de la lame sur un des essieux. C'est un ensemble combiné de rotule et de patin élastique.

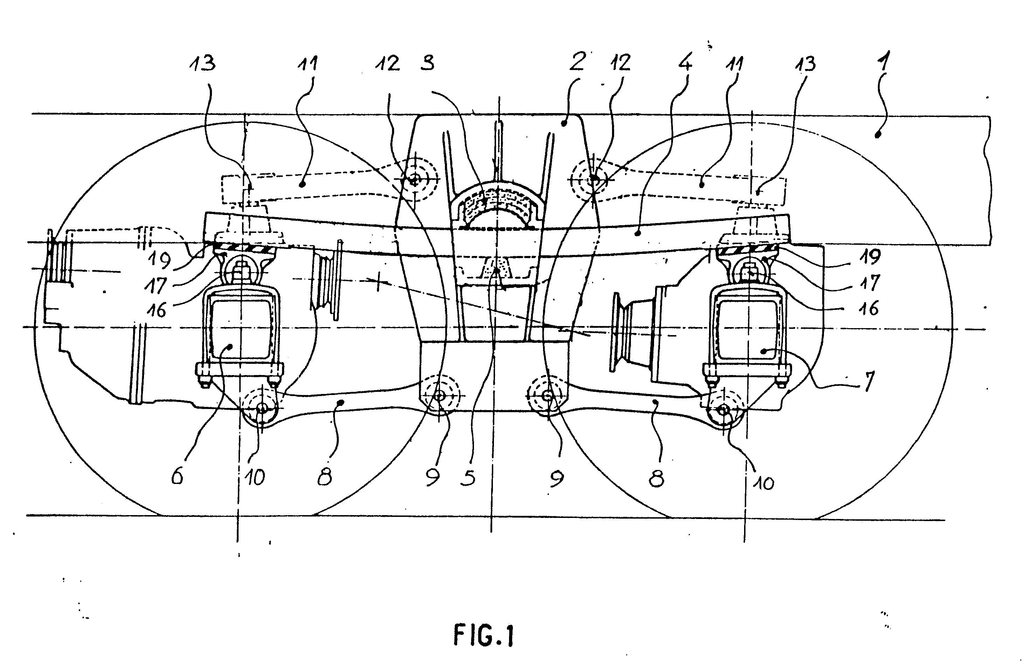

Suivant un mode de réalisation, on peut voir sur la figure 1 :

Une ferrure centrale 2, fixée sur la partie extérieure du longeron 1 qui supporte l'appui central 3 du ressort à lame en matériau composite 4, ainsi que le système élastique 5 chargé de plaquer la lame de ressort 4 sur la ferrure centrale 2 dans le cas où la suspension est complètement déchargée (comme les opérations de maintenance en garage). L'essieu avant 6 et l'essieu arrière 7 sont guidés dans le sens longitudinal du véhicule, par des biellettes latérales inférieures 8 articulées en 9 sur la ferrure centrale 2, et en 10 à la partie inférieure de chaque essieu.

Ces mêmes essieux avant 6 et arrière 7, sont guidés dans les sens latéral et longitudinal par des triangles 11 articulées en 12 sur la ferrure centrale, et rotulées en 13 au centre de leur partie supérieure.

Ce dispositif, décrit dans la technique antérieure, assure un bon guidage des essieux et décharge la lame de ressort 4 des contraintes longitudinales et transversales. Mais, compte tenu de ses caractéristiques, le matériau composite doit être installé judicieusement de façon à éliminer toutes les contraintes supplémentaires (cisaillement, flexion transversale, torsion) liés aux systèmes de bridage et aux montages utilisés dans les solutions actuelles.

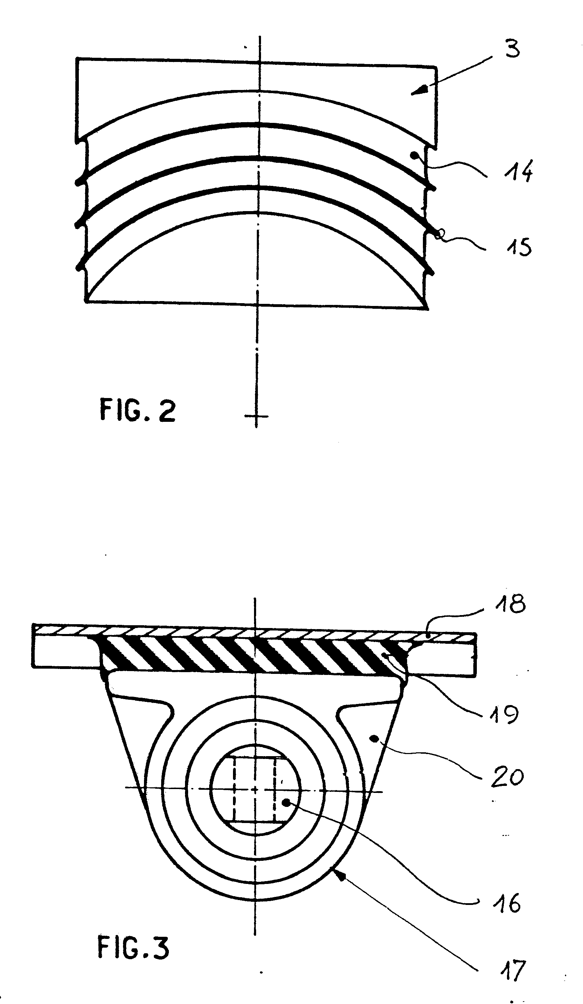

L'appui central décrit sur la figure 2, est un support élastique composé de lames de caoutchouc 14 adhérisées avec des plaques intercallaires métalliques 15 courbées suivant un rayon dont le centre est positionné en 16 au milieu de l'épaisseur de la lame de ressort 4. On obtient ainsi un pivotement de la lame de ressort autour d'un axe fictif sans articulation, ce qui est avantageux pour le prix de revient du mécanisme et de son entretien qui est nul. En outre, l'élasticité de l'appui absorbe bien les éventuels mouvements angulaires subis par cette partie de la lame de ressort.

Cet appui central 3, peut être maintenu sur la face supérieure de la lame de ressort par collage ou tout autre moyen connu.

La tenue en place dans la ferrure centrale 2 de l'appui central 3, est assurée par un système comme un plot élastique 5, connu en soi, qui génère un effort vertical opposé. Ce dispositif est destiné à plaquer l'appui central 3 dans la ferrure centrale 2 en cas de décharge de la suspension.

La figure 3 représente un mode de réalisation d'un dispositif de liaison souple et rotulé de l'extrémité de la lame de ressort avec la partie correspondante de l'essieu.

La rotule 16, fixée sur l'extrémité de l'essieu 7 et 8, débat dans un palier 17. Ce palier est composé d'une semelle 18 qui est fixée à l'extrémité de la lame de ressort par des moyens connus comme un système de brides. le bâti 20 recevant la rotule 16 est relié à la semelle 18 par l'intermédiaire d'une plaque de caoutchouc adhérisée 19 dont le rôle est d'absorber les légers débattements longitudinaux de l'extrémité correspondante de la lame de ressort 4.

## Revendications

1. Dispositif de fixation d'un ressort à lame en matériau composite, notamment pour les essieux tandem d'un véhicule industriel, comprenant un dispositif de pivotement (3) de la partie centrale de la lame (4) autour d'un axe transversal ainsi que des moyens d'accouplement des extrémités de la lame avec les essieux avant (6) et arrière (7), caractérisé en ce que le pivotement de la partie centrale est un support élastique (3) lamellé courbe maintenu en appui sur le milieu de la face supérieure de la lame (4), et que les moyens d'accouplement des extrémités de la lame avec les essieux avant (6) et arrière (7) sont des paliers rotulés (17) qui sont maintenus en appui sous les faces extrêmes de la lame par un moyen leur assurant un axe de liberté longitudinal.

2. Dispositif de fixation selon la revendication 1, caractérisé en ce que le support central (3), est constitué par un ensemble de lames de caoutchouc (14) adhérisées avec des plaques intercallaires métalliques (15) courbées suivant un rayon dont le centre est positionné au milieu de l'épaisseur de la lame de ressort composite, et qu' il est fixé sur la lame de ressort par collage ou tout autre moyen connu.

3. Dispositif de fixation selon la revendication 1, caractérisé en ce que l'appui de l'essieu sur l'extrémité de la lame (4) est une articulation rotulée (17).

4. Dispositif selon la revendication 3, caractérisé en ce que l'articulation rotulée (17) est fixée à l'extrémité de la lame (4) par l'intermédiaire d'une plaque de caoutchouc (19).

FIG.1

EP 0 359 599 A1

3

14

15

FIG. 2

18

19

20

16

17

FIG.3

# RAPPORT DE RECHERCHE EUROPEENNE

Office européen des brevets

Numero de la demande

EP 89 40 2100

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 183 599 (RENAULT)<br>* Page 2; figures 1,3 * | 1 | B 60 G 5/053 |
| A | FR-A-1 158 321 (THE ENGLISH ELECTRIC CO. LTD)<br>* Page 1, colonne de droite, lignes 16-36; figures 1-3 * | 1,2 | |
| A | EP-A-0 263 388 (MAN)<br>* Colonne 3, lignes 25-34; figures * | 1,2 | |
| A | EP-A-0 161 155 (RENAULT)<br>* Résumé; figure 1 * | 2 | |
| A | EP-A-0 137 096 (F. JÖRN)<br>* Résumé; figures 1-9 * | 3 | |

DOMAINES TECHNIQUES RECHERCHES (Int. Cl.5)

B 60 G
F 16 F

Le présent rapport a été établi pour toutes les revendications

| Lieu de la recherche | Date d'achèvement de la recherche | Examinateur |
|---|---|---|
| LA HAYE | 05-12-1989 | LINTZ C.H. |

EPO FORM 1503 03.82 (P0402)